# EUROPÄISCHE PATENTSCHRIFT

(11) **EP 0 438 044 B1**
(45) Veröffentlichungstag und Bekanntmachung des Hinweises auf die Patenterteilung: **08.01.1997**
(21) Anmeldenummer: 90890303.2
(22) Anmeldetag: 19.11.1990
(51) Int. Cl.: H01M 12/08, H01M 2/40, H01M 10/36

(54) **Galvanisches Element, insbesondere wiederaufladbare Zink/Brom-Batterie**
Galvanic cell, especially a rechargeable zinc/bromine battery
Elément galvanique, en particulier accumulateur rechargeable zinc/brome

(30) Priorität: 23.11.1989 AT 2672/89
(43) Veröffentlichungstag der Anmeldung: 24.07.1991
(73) Patentinhaber: Elin Energieanwendung Gesellschaft m.b.H., A-1140 Wien (AT)
(72) Erfinder: Tomazic, Gerd, Dipl.-Ing.-Dr., A-8680 Mürzzuschlag (AT)
(74) Vertreter: Krause, Peter

(56) Entgegenhaltungen:
- EP-A- 0 343 144
- PATENT ABSTRACTS OF JAPAN vol. 11, no. 198 (E-519)(2645) 25. Juni 1987 & JP-A-62024553
- PATENT ABSTRACTS OF JAPAN vol. 11, no. 182 (E-515)(2629) 11. Juni 1987 & JP-A-62015772

## Beschreibung

Die Erfindung bezieht sich auf ein galvanisches Element, insbesondere Sekundärelement, z. B. wiederladbare Zink/Brom-Batterie.

Bei galvanischen Elementen, insbesondere bei Batterien wird zur Erhöhung der Kapazität und Leistung einer Batterie mit umlaufendem Elektrolytsystem gearbeitet. Einerseits kann hierbei eine besonders einfache Speicherung des elektrochemisch umgewandelten Ions, z. B. des Broms durchgeführt werden und anderseits kann durch die Strömung der Elektrolytflüssigkeit entlang der Elektroden der Stofftransport zur Elektrodenoberfläche günstig beeinflußt werden. Bei einer Zink/Brom-Batterie ist es bekannt, daß das beim Ladungsprozeß freiwerdende Brom mit einem Komplexbildner, z. B. einer quarternären Ammoniumbase oder dgl. gebunden wird, wobei dieser Komplex nur eine geringe Löslichkeit im wässrigen Elektrolytsystem aufweist. An den Elektroden, die z. b. bipolar ausgebildet sind, kommt es zur Abscheidung eines Zinkfilmes. Zwischen den Elektroden sind jeweils semipermeable Separatoren bzw. Diaphragmen angeordnet, wobei eine besonders vorteilhafte Ausbildung darin besteht, die Elektroden und Separatoren an ihren äußeren Rändern miteinander zu verbinden, wobei die Ränder jeweils aufgeschmolzen werden und gegebenenfalls mit einer eigenen Schichte, die beispielsweise mittels eines Extruders aufgebracht wird, umhüllt ist. Die Materialwahl und zwar Kohlenstoff, insbesondere Ruß, der mit Polypropylen bzw. Polyethylen gebunden ist, wobei diese Bindung lediglich im aktiven Teil der Elektrode und nicht in den Randbereichen erfolgt, da diese nichtleitend ausgebildet sind, ist für die Lebensdauer eines galvanischen Elementes von besonderer Bedeutung. Der Elektrolyt, welcher molekulares Brom aufweist, verursacht über lange Zeiträume eine Versprödung der Oberfläche. Dieser Veränderung der Oberfläche des Materials kann zwar durch entsprechende Dimensionierung der Elektroden und Separatoren Rechnung getragen werden, jedoch ist mit einer größeren Dicke derselben ein steigender Innenwiderstand des Elementes zwangsläufig verbunden, wodurch Kapazitätsverluste bedingt sind.

Weiters besteht das Bestreben, die jeweiligen Elektrolyträume ebenfalls möglichst mit geringer Dicke auszubilden, um ebenfalls den Innenwiderstand zu minimieren.

Eine weitere Belastung eines galvanischen Elemetes besteht darin, daß während des Betriebes Temperaturänderungen, insbesondere starke Temperaturerhöhungen auftreten. Durch diese Temperaturerhöhungen kann es zu thermischen Belastungen innerhalb einer Batterie kommen, sodaß Verwerfungen sowohl der Elektrode als auch der Separatoren auftreten können, wodurch ungleichmäßig durchflossene Elektrodenräume bedingt sind, sodaß ungleichmäßige Abscheidungen, insbesondere des Zinkfilms aber auch ungleichmäßige Belastungen der Elektrode und insbesondere des Separators bedingt sind.

In diesem Zusammenhang wird auf JP-A 622 4553 verwiesen, aus der ein Zink-Chlor-Akkumulator bekannt ist. Dieser Zink-Chlor-Akku weist jedoch einen weit anderen Konstruktionsaufbau auf. So ist der Gasraum über den einzelnen Zellen angeordnet. Der Vorratsbehälter für den Elektrolytkreislauf liegt unter dem Elektrolytspiegel der Zellen, wodurch im Vorratsbehälter kein Gasraum entstehen kann. Darüber hinaus benötigen derartige Zellen aber nur einen Elektrolytkreislauf ohne Separatoren.

Ferner ist aus der nachveröffentlichten EP-A 343.144 sowie aus "Handbook of Batteries and Fuel Cells" von D. Linden, USA 1984, Kap. 29 "Zinc/Bromine Batteries" Seiten 29-1 bis 29-10 eine Zink/Brom Zelle mit kunstoffgebundenenn Elektroden und Separatoren, Kreisläufe für Anolyt und Katholyt mit rohrförmigen Zu- und Ableitungen, die über Sammelleitungen mit einem Elektrolytsammelbehälter verbunden sind, bekannt.

Die vorliegende Erfindung hat sich zur Aufgabe gestellt, ein galvanisches Element, wie es beispielsweise in der EP 168.377 Al beschrieben ist zu verbessern und die unterschiedliche Druckbeanspruchung der Elektroden und Separatoren zumindest während des Stillstandes des Elektrolyt-Kreislaufes zu vermeiden bzw. eine Druckentlastung herbeizuführen.

Das erfindungsgemäße galvanische Element, insbesondere Sekundärelement, z. B. wiederladbare Zink/Brom-Batterie mit mit kunststoffgebundenen Kohlenstoff aufgebauten, insbesondere bipolaren, Elektroden und/oder mit Kunststoff aufgebauten semipermeablen Separatoren, wobei zwischen Elektroden und Separatoren jeweils Anoden- bzw. Kathodenräume gebildet sind, welche jeweils rohr- und/oder schlauchförmige Zu- und Ableitungen für den Elektrolyten aufweisen, mit zumindest zwei Elektrolyt-Kreisläufen mit je einem Vorratsbehälter, je einem Fördermittel, insbesondere Pumpe und vorzugsweise zumindest je einen Wärmetauscher, wobei die rohr- und/oder schlauchförmigenZu- und/oder Ableitungen jeweils in eine Sammelleitung münden, besteht im wesentlichen darin, daß die Zu- und Ableitungen, vorzugsweise über die jeweilige Sammelleitung, mit einem Gasraum des Elektrolyt-Sammelbehälters, verbunden sind, und daß eine zusätzliche fluiddichte Verbindungsleitung zwischen den Gasraum und der Sammelleitung angeordnet ist. Durch diese einfache Maßnahme kann eine Druckentlastung besonders einfach erreicht werden. In der Sammelleitung und damit in den einzelnen Zu- und Ableitungen und auch in den Elektrodenräumen herrscht ein gleichmäßiger Druck, wobei durch die Kompressibilität des Gases, selbst wenn ein kurzer Über- oder Unterdruck gegenüber dem Atmosphärendurck auftreten würde, eine Art Gasfeder gebildet wird. Es war nun durchaus nicht naheliegend die Zu- und Ableitungen mit einem Gasraum zu verbinden, da bislang das Vorurteil bestand, daß durch eine derartige konstruktive Maßnahme während des Betriebes in den Elektrodenräumen Gasblasen zu liegen kommen, die sodann durch den strömenden Elektrolyten nur schwer herausgespült werden können und durch diese ebenfalls nicht durchströmte Bereiche und damit nicht kapazitiv genützte Bereiche der Elektrode vorliegen. Ein weiterer Vorteil, der sich durch diese Vorgangsweise ergibt, besteht darin, daß während der Stillstandzeiten, also weder während des Aufladens noch während des Entladens Bypass-Ströme durch den Elektrolyten, wie sie bei einem umlaufenden Elektrolytsystem während des Betriebes unvermeidlich sind, außerhalb dieser Zeiten vollkommen vermeidbar sind, da zwischen den einzelnen Zu- und Ableitungen, die in der Regel Elektrolytflüssigkeit aufweisen, kein elektrischer Leiter weder erster noch zweiter Art vorgesehen ist. Die Leitungen für den Elektrolyten sind, wie an sich bekannt aus elektrisch nicht leitendem Material aufgebaut.

Bei entsprechender Dimensionierung und Anordnung der Sammelleitung kann alleine durch Unterbinden des Umlaufvorgangs z.B. Abschalten der Pumpe eine Entleerung der Sammelleitung auftreten, wobei je nach Anordnung der Sammelleitung in dieser Gasblasen, insbesondere aus dem Behälter für die Elektrolytflüssigkeit, aufsteigen können. Eine besonders einfache Konstruktion ist dann gewährleistet, wenn eine zusätzliche fluiddichte Verbindungsleitung zwischen dem Gasraum und der Sammelleitung angeordnet ist, da dann unmittelbar nach Beendigung des Umlaufvorganges eine Belüftung des Sammelstückes erfolgen kann, wobei die Elektrolytflüssigkeit entweder über die Sammelleitung in den Elektrolytbehälter gelangen kann oder über eine zusätzliche Bypassleitung, die nicht über das Fördermittel geführt ist, ebenfalls in den Elektrolytbehälter zurückfließen kann. Die Elektrodenräume sind jedenfalls weiterhin mit Elektrolytflüssigkeit beaufschlagt, wobei allerdings eine Druckentlastung gewährleistet ist.

Eine besonders rasche Wirksamkeit ist dann gegeben, wenn die Sammelleitung im Bereich der Einmündung der Zu- und/ oder Ableitungen mit dem Gas aus dem Gasraum beaufschlagbar ist.

Mündet die zusätzliche fluiddichte Verbindungsleitung bei Normallage des galvanischen Elementes im oberen Bereich, insbesondere im Bereich des höchsten Punktes der Sammelleitung so kann auf besonders einfache Weise ein Eintreten von Gasblasen in die Elektrodenräume trotz sicherer Gasbeaufschlagung des Sammelstückes erreicht werden. Ist bei horizontal angeordneten Elektroden in Normallage des galvanischen Elementes das Sammelleitungsstück, in welchem die einzelnen Zu- und/oder Ableitungen münden quer, insbesondere normal zu den Elektroden vorzugsweise vertikal angeordnet, so kann eine besonders günstige konstruktive Ausbildung sowohl der Zu- als auch Ableitungen und der Sammelleitung durchgeführt werden, wobei Strömungsverluste in den schwächer dimensionierten Zu- und Ableitungen besonders gering gehalten werden können.

Ist bei vertikal angeordneten Elektroden in Normallage des galvanischen Elementes das Sammelleitungsstück, in welchem die einzelnen Zu- und/oder Ableitungen münden parallel zu den Elektroden angeordnet, so kann eine besonders kompakte Ausbildung des galvanischen Elementes erreicht werden, wobei beispielsweise bei Einmündung der Zu- und/oder Ableitungen bei horizontal angeordneten oder leicht geneigt angeordneten Sammelleitungsstück die Einmündungen entlang einer unteren Mantellinie erfolgen, wohingegen die Gasleitung in einen oberen Bereich beispielsweise radial gegenüber in das Sammelstück mündet.

Eine besonders rasche und gleichmäßige Entlastung des Zellenpaketes ergibt sich dann, wenn die Zu- und/oder Ableitungen dieselbe Länge zwischen Austritt aus dem Elektrodenraum und Einmündung in die Sammelleitung aufweisen.

Konstruktiv besonders leicht auszubilden und auch in der Handhabung eine besonders störungsfreie Batterie bzw. galvanisches Element ergibt sich dann, wenn das Sammelleitungsstück in dem die einzelnen Zu- und/oder Ableitungen münden durch ein Rohrstück gebildet ist.

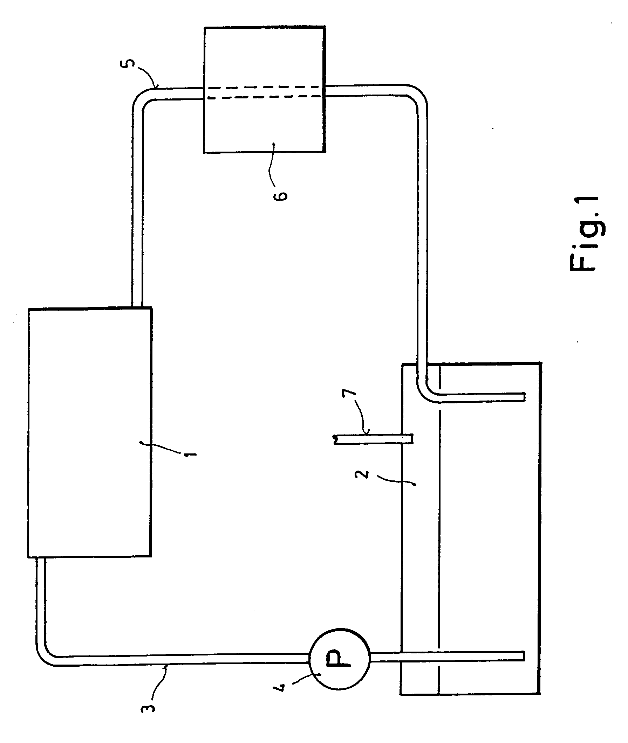

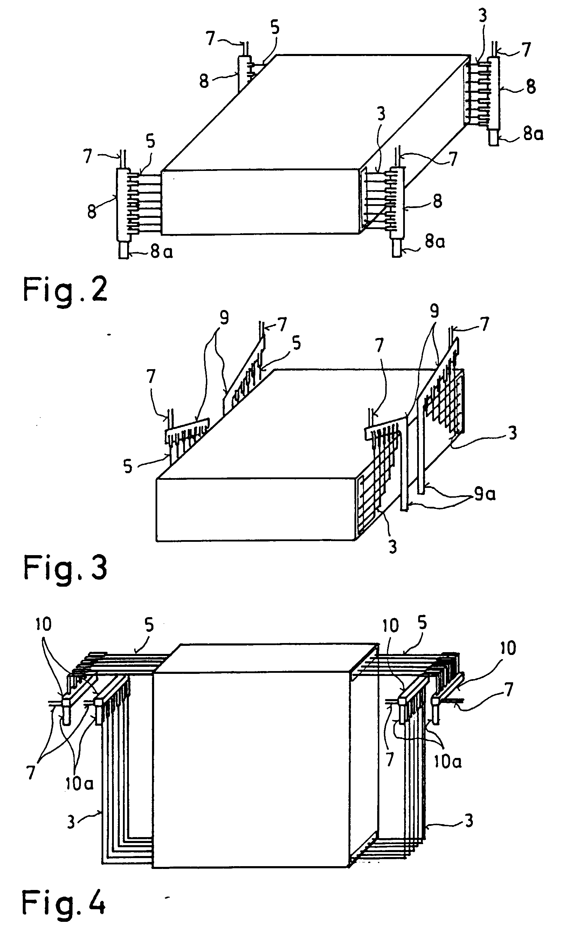

Im folgenden wird die Erfindung anhand der Zeichnungen näher erläutert:
Es zeigen: Fig. 1 in schematischer Darstellung einen Elektrolyt-Kreislauf und die Fig. 2 bis 4 Zellenpakete mit einzelnen Zu- und Ableitungen, die in Sammelleitungen münden.

Bei dem in Fig. 1 dargestellten Elektrolyt-Kreislauf wird ein Anoden- bzw. Kathodenraum 1, der durch nicht dargestellte an ihren Rändern miteinander verbundene Elektroden bzw. Separatoren gebildet, die an ihren Rändern miteinander flüssigkeitsdicht verbunden sind. Die Elektroden und Separatoren sind mit thermoplastischen Kunststoff, z.B. Polypropylen bzw. Polyethylen aufgebaut. Die Elektrode weist einen aktiven Bereich in der Mitte auf, der mit Ruß, welcher durch den Kunststoff gebunden ist, aufgebaut ist, welcher von einem umlaufenden Randbereich aus nichtleitendem Kunststoff umgeben ist. Der Raum 1 ist über eine Zuleitung 3 und die Pumpe 4 mit dem Vorratsbehälter 2 verbunden. Die Ableitung 5 führt über einen Wärmetauscher 6 in den Vorratsbehälter 2 zurück. In dem Gasraum des Vorratsbehälters mündet eine fluiddichte Verbindungsleitung 7, die in die nicht dargestellte Sammelleitung mündet.

Bei dem in Fig. 2 dargestellten Zellenpaket aus horizontal liegenden Elektroden und Separatoren münden die einzelnen schlauchförmigen Zuleitungen 3 und Ableitungen 5 in eine rohrförmige Sammelleitung 8, die über die schlauchförmige Sammelleitung 8a mit dem Vorratsbehälter 2 verbunden ist. An der höchsten Stelle der rohrförmigen Sammelleitung mündet eine fluiddichte Verbindungsleitung 7, die in dem Gasraum des Vorratsbehälters 2 endigt.

Bei dem in Fig. 3 dargestellten Zellenpaket münden die einzelnen Zu- und Ableitungen 3, 5 in eine zur Horizontalen leicht geneigte Sammelleitung 9, wobei die fluiddichte Verbindungsleitung, welche zur Druckentlastung dient, am höchsten Punkt angeschlossen ist. Vis-á-vis zur fluiddichten Verbindungsleitung münden entlang einer Mantellinie die einzelnen Zu- und Ableitungen. Die Sammelleitungsstücke 9 sind über die schlauchförmigen Sammelleitungsstücke 9a mit dem Vorratsbehälter verbunden.

Bei den in Fig. 4 dargestellten Zellenpaket sind die Elektroden und Separatoren vertikal angeordnet, wobei die einzelnen Zu- und Ableitungen 3, 5, jeweils in horizontal angeordneten Sammelleitungsstücken 10 münden, die über die Sammelleitungsschlauchstücke 10 a mit dem Vorratsbehälter verbunden sind. Die horizontal angeordneten rohrförmigen Sammelleitungen 10 sind mit der fluiddichten Verbindungsleitung 7, mit dem Gasraum des Vorratsbehälters verbunden.

Bei laufendem Lade- bzw. Entladevorgang wird durch die Pumpe der Elektrolyt in Kreislauf gehalten, wobei gleichzeitig für eine Temperierung, meist Kühlung des Elektrolyten durch den Wärmetauscher der z.B. durch Kunststofftaschen gebildet sein kann, durch die die Sammelleitungen bzw. die einzelnen Zu- und Ableitungen geführt sind, gebildet ist. Wird die Entladung bzw. die Ladung der Batterie unterbrochen, so werden die rohrförmigen Sammelleitungsstücke über die fluiddichte Verbindungsleitung belüftet, wobei durch die Vorgangsweise, daß die Verbindungsleitung in den Gasraum des Vorratsbehälters mündet, keine zusätzliche Umluft in das System gebracht wird. Der Elektrolyt kann entlang der Sammelleitung im wesentlichen drucklos in das Vorratsgefäß zurückfließen, d.h. Druck der durch die an sich inkompressible Flüssigkeit in den Elektrolyträumen aufgebaut wird wird entspannt und Druckausgleiche können gegebenenfalls durch das Gas selbst erfolgen. Ein weiterer Vorteil besteht darin, daß die elektrische Verbindung durch den Leiter zweiter Ordnung und zwar den Elektrolyten ebenfalls sicher vermieden ist.

## Patentansprüche

1. Galvanisches Element, insbesondere Sekundärelement, z. B. wiederladbare Zink/Brom-Batterie, mit mit kunststoffgebundenen Kohlenstoff aufgebauten, insbesondere bipolaren, Elektroden und/oder mit Kunststoff aufgebauten semipermeablen Separatoren, wobei zwischen Elektroden und Separatoren jeweils Anoden- bzw. Kathodenräume (1) gebildet sind, welche jeweils rohr- und/oder schlauchförmige Zu- und Ableitungen (3, 5) für die Elektrolyten aufweisen, mit zumindest zwei Elektrolyt-Kreisläufen mit je einem Vorratsbehälter (2), je einem Fördermittel, insbesondere Pumpe (4), und vorzugsweise zumindest je einem Wärmetauscher (6), wobei die rohr- und/oder schlauchförmigen Zu- und/oder Ableitungen (3, 5) jeweils in eine Sammelleitung (8, 9, 10) münden, wobei die Zu- und/oder Ableitungen (3, 5), vorzugsweise über die jeweiligen Sammelleitungen (8, 9, 10), mit einem Gasraum des Elektrolyt-Sammelbehälters (2), verbunden sind, und daß eine zusätzliche fluiddichte Verbindungsleitung (7), zwischen dem Gasraum und der Sammelleitung (8, 9, 10), angeordnet ist.

2. Galvanisches Element nach Anspruch 1, dadurch gekennzeichnet, daß die zusätzliche fluiddichte Verbindungsleitung (7) bei Normallage des galvanischen Elementes im oberen Bereich, insbesondere im Bereich des höchsten Punktes, der Sammelleitung (9, 10) mündet.

3. Galvanisches Element nach Anspruch 1 oder 2, dadurch gekennzeichnet, daß bei horizontal angeordneten Elektroden in Normallage des galvanischen Elementes das/die Sammelleitungsstücke (10), in welchen die einzelnen Zu- und/oder Ableitungen (3, 5) münden, quer, insbesondere normal, zu den Elektroden, vorzugsweise vertikal, angeordnet ist/sind.

4. Galvanisches Element nach einem der Ansprüche 1 bis 3, dadurch gekennzeichnet, daß bei vertikal angeordneten Elektroden in Normallage des galvanischen Elementes das Sammelleitungsstück (9), in welchem die einzelnen Zu- und/oder Ableitungen (3, 5) münden, parallel zu den Elektroden angeordnet ist.

5. Galvanisches Element nach einem der Ansprüche 1 bis 4, dadurch gekennzeichnet, daß die Zu- und/oder Ableitungen (3, 5) dieselbe Länge zwischen Austritt aus dem Elektrodenraum und Einmündung in die Sammelleitung (8, 9, 10), aufweisen.

6. Galvansiches Element nach einem der Ansprüche 1 bis 6, dadurch gekennzeichnet, daß das Sammelleitungsstück (8, 9, 10) in das die einzelnen Zu- und Ableitungen (3, 5) münden durch ein Rohrstück gebildet ist.

## Claims

1. A galvanic element, in particular a secondary element, for example a rechargeable zinc-bromine battery, comprising electrodes, in particular bipolar electrodes, constructed from carbon bound with synthetic material, and/or comprising semi-permeable separators constructed from synthetic material, wherein anode- and cathode chambers (1) are in each case formed between the electrodes and separators, which chambers in each case comprise tubular and/or hose-like supply lines and discharge lines (3, 5) for the electrolytes, with at least two electrolyte circulation systems each comprising a supply container (2), a conveying means, in particular a pump (4), and preferably at least one heat exchanger (6), where the tubular and/or hose-like supply lines and/or discharge lines (3, 5) in each case open into a collecting line (8, 9, 10), where the supply lines and/or discharge lines (3, 5) are connected, preferably via the respective collecting lines (8, 9, 10), to a gas chamber of the electrolyte collecting container (2), and that an additional fluid-tight connecting line (7) is arranged between the gas chamber and the collecting line (8, 9, 10).

2. A galvanic element according to Claim 1, characterised in that in the normal position of the galvanic element the additional fluid-tight connecting line (7) opens into the upper region, in particular the region of the highest point, of the collecting line (9, 10).

3. A galvanic element according to Claim 1 or 2, characterised in that when the electrodes are arranged horizontally, in the normal position of the galvanic element, the collecting line section(s) (10) into which the individual supply lines and/or discharge lines (3, 5) open is/are arranged transversely, in particular perpendicularly, to the electrodes, and preferably is/are arranged vertically.

4. A galvanic element according to one of Claims 1 to 3, characterised in that when the electrodes are arranged vertically, in the normal position of the galvanic element, the collecting line section (9) into which the individual supply lines and/or discharge lines (3, 5) open is arranged in parallel with the electrodes.

5. A galvanic element according to one of Claims 1 to 4, characterised in that the supply lines and/or discharge lines (3, 5) possess the same length between their exit from the electrode chamber and their entry into the collecting line (8, 9, 10).

6. A galvanic element according to one of Claims 1 to 6, characterised in that the collecting line portion (8, 9, 10) into which the individual supply lines and discharge lines (3, 5) open is formed by a tube section.

## Revendications

1. Elément galvanique, en particulier élément secondaire, par exemple batterie au zinc/brome rechargeable, avec des électrodes construites avec du carbone lié à une matière synthétique, en particulier des électrodes bipolaires et/ou des séparateurs servi-perméables structurés avec une matière synthétique, entre les électrodes et les séparateurs étant respectivement constitués des espaces d'anodes, respectivement de cathodes (1), qui présentent chacun des conduites d'amenée et d'évacuation (3, 5), se présentant sous forme de tube et/ou de tuyau, pour les électrolytes, avec au moins deux circuits d'électrolyte ayant chacun un récipient de stockage (2), chacun un moyen de transport, en particulier une pompe (4) et, de préférence, au moins chacun un échangeur de chaleur (6), les conduites d'amenée et/ou d'évacuation (3, 5) en forme de tube et/ou de tuyau débouchant chacune dans une conduite collectrice (8, 9, 10), les conduites d'amenée et/ou d'évacuation (3, 5) étant reliées de préférence par l'intermédiaire des conduites collectrices (8, 9, 10) respectives à une enceinte à gaz du récipient collecteur d'électrolyte (2), et en ce qu'une conduite de liaison (7) supplémentaire étanche aux fluides est disposée entre l'enceinte à gaz et la conduite collectrice (8, 9, 10).

2. Elément galvanique selon la revendication 1, caractérisé en ce que la conduite de liaison (7) étanche aux fluides supplémentaire débouche, en position normale de l'élément galvanique, dans la zone supérieure, en particulier dans la zone du point le plus haut de la conduite collectrice (8, 9, 10).

3. Elément galvanique selon la revendication 1 ou la revendication 2, caractérisé en ce que, dans le cas où les électrodes sont disposées horizontalement, dans la position normale de l'élément galvanique, la ou les pièce(s) de conduite collectrice (10) dans lesquelles les conduites d'amenée et/ou d'évacuation (3, 5) respectives débouchent est/sont disposée(s) transversalement, en particulier perpendiculairement par rapport aux électrodes, de préférence verticalement.

4. Elément galvanique selon l'une des revendications 1 à 3, caractérisé en ce que dans le cas où les électrodes sont disposées verticalement, dans la position normale de l'élément galvanique, la conduite de conduite collectrice (9) dans laquelle débouchent les différentes conduites d'amenée et/ou d'évacuation (3, 5) sont disposées parallèlement aux électrodes.

5. Elément galvanique selon l'une des revendications 1 à 4, caractérisé en ce que les conduites d'amenée et/ou d'évacuation (3, 5) présentent la même longueur entre la sortie depuis l'enceinte d'électrode et l'embouchure d'entrée dans la conduite collectrice (8, 9, 10).

6. Elément galvanique selon l'une des revendications 1 à 6, caractérisé en ce que la pièce de conduite collectrice (8, 9, 10) dans laquelle débouchent les différentes conduites d'amenée et d'évacuation (3, 5) est constituée par une pièce tubulaire.
